# EUROPÄISCHE PATENTSCHRIFT

(11) **EP 3 680 611 B1**
(45) Veröffentlichungstag und Bekanntmachung des Hinweises auf die Patenterteilung: **27.10.2021**
(21) Anmeldenummer: 20152756.1
(22) Anmeldetag: 23.11.2016
(51) Int. Cl.: G01C 15/00, G06F 21/88, A45C 13/02, A45C 11/00, G12B 9/00, H04W 12/12, H04W 12/00, H04W 12/126, H04W 4/029, H04W 4/02, G01S 19/16, A45C 15/00, A45C 13/18

(54) **SCHUTZBEHÄLTER**
PROTECTIVE CONTAINER
RÉCIPIENT PROTECTEUR

(30) Priorität: 24.11.2015 EP 15196101
(43) Veröffentlichungstag der Anmeldung: 15.07.2020
(62) Teilanmeldung aus: 16798797.3
(73) Patentinhaber: Leica Geosystems AG, 9435 Heerbrugg (CH)
(72) Erfinder: BRODER, Katherine, 9491 Ruggel (LI); HARRING, Thomas, 6340 Baar (CH); BÖCKEM, Burkhard, 8916 Jonen AG (CH)
(74) Vertreter: Kaminski Harmann

(56) Entgegenhaltungen:
- DE-A1-102012 111 321
- IT-A1- PD20 120 192
- US-A1- 2008 116 093
- US-A1- 2013 109 375
- US-A1- 2014 000 771

## Beschreibung

Die vorliegende Erfindung betrifft einen tragbaren Schutzbehälter, insbesondere ausgestaltet als ein Koffer, zum sicheren Transport und Verwahren von Vermessungsgeräten. Insbesondere ist der erfindungsgemässe Schutzbehälter dazu ausgestaltet, ein im Inneren befindliches wertvolles und empfindliches Vermessungsgerät vor Diebstahl, unbefugtem Gebrauch und/oder potentiell schädlichen Umwelteinflüssen zu schützen. Dazu weist der Behälter erfindungsgemäss Kommunikationsmittel zum Senden und Empfangen von Daten über ein Funknetz auf, insbesondere zum Empfangen von Lokalisierungsdaten, die der Kommunikationseinheit ein zumindest grobes Lokalisieren des Behälters ermöglichen.

Verfahren und Systeme zur Entfernungsmessung werden finden in verschiedenen Bereichen Anwendung. Beispiele hierfür sind ausgesprochen präzise Vermessungen in geodätischen Applikationen, aber auch Messaufgaben im Bereich der Bauinstallation oder für industrielle Prozesssteuerungen. Für diese Aufgaben werden stationäre, bewegbare oder auch handhaltbare Entfernungsmessgeräte eingesetzt, welche eine optische Entfernungsmessung zu einem ausgewählten Messpunkt ausführen. Als Vermessungsgerät werden im folgenden elektronische Instrumente verstanden, die im Rahmen der geodätischen, industriellen oder Bauvermessung Verwendung finden. Dies umfasst erfindungsgemäss Geräte zur optischen Abstandsmessung und zur Erfassung von dreidimensionalen Koordinaten entfernter Objekte wie Totalstationen, Lasertracker oder Laserscanner.

Solche für professionelle Anwendungen gedachten, insbesondere hochpräzisen Geräte sind sowohl relativ teuer in der Anschaffung als auch empfindlich gegenüber schädlichen Umwelteinflüssen, wie z. B. Feuchtigkeit oder extremen Temperaturen, und gegenüber Erschütterungen und Stössen beim Transport. Es ist folglich wünschenswert, wertvolle Vermessungsgeräte effektiv vor unberechtigter Verwendung, Diebstahl und Beschädigung zu schützen.

Weiterhin ist es wünschenswert, dass diese Geräte möglichst effizient eingesetzt werden. Das heisst, dass insbesondere unnötige Wartezeiten am Einsatzort des Gerätes vermieden werden sollten - z. B. solche Zeiten in denen das Gerät vor dem Einsatz zunächst konfiguriert werden muss, in denen einsatzbezogene bzw. einsatzortbezogene Daten in das Gerät geladen werden, oder in denen das Gerät auf Betriebstemperatur gebracht wird.

Das Dokument US 2013/109375 offenbart einen Schutzbehälter zum Transport eines elektrischen Werkzeugs, beispielsweise eines Laser-Entfernungsmessers, wobei der Schutzbehälter eine Kommunikationseinheit zur Kommunikation mit dem Werkzeug im Innenraum des Behälters und zur Kommunikation über ein externes Netzwerk sowie eine Versorgungseinheit zur Stromversorgung für die Kommunikationseinheit umfasst.

Das Dokument DE 10 2012 111321 offenbart einen Schutzbehälter zum Transport eines elektrischen Werkzeugs, beispielsweise eines Laser-Entfernungsmessers, wobei der Schutzbehälter eine Haltevorrichtung für das Werkzeug und eine Ladestation umfasst, welche so eingerichtet ist, dass ein Ladezustand eines Akkumulators des Werkzeugs messbar und auf einem Display des Schutzbehälters anzeigbar ist.

Es ist daher eine Aufgabe der vorliegenden Erfindung, einen verbesserten Schutzbehälter für Vermessungsgeräte bereitzustellen.

Es ist eine weitere Aufgabe, einen solchen Schutzbehälter und ein Verfahren bereitzustellen, die es ermöglichen, ein im Schutzbehälter befindliches Vermessungsgerät auf einen Einsatz vorzubereiten.

Mindestens eine dieser Aufgaben wird durch die Merkmale des unabhängigen Anspruchs 1 gelöst. Vorteilhafte Ausgestaltungen der Erfindung finden sich dabei in den abhängigen Ansprüchen.

Der erfindungsgemässe Schutzbehälter ist zur Aufnahme eines bestimmten Vermessungsgerätes oder eines bestimmten Vermessungsgeräte-Typs mit bekannten Ausmassen ausgestaltet. Ein solches Vermessungsgerät kann insbesondere als eines der folgenden ausgestaltet sein:
- eine Totalstation,
- ein Lasertracker,
- ein Laserscanner.

Optional kann der Schutzbehälter Rollen oder Räder aufweisen, die dazu ausgestaltet sind, ein Bewegen des Behälters durch einen einzelnen Benutzer mittels Schieben oder Ziehen zu ermöglichen.

Insbesondere kann dabei der Innenraum mit einem Trägermaterial verfüllt sein, beispielsweise einem Schaumstoff oder einer mittels Blasformen hergestellter Kunststoffform, wobei die mindestens eine Halterung eine Aussparung in dem Trägermaterial mit einer dem Vermessungsgerät entsprechenden Form ist.

Zur Aufnahme von Bauteilen eines zerlegten Vermessungsgerätes kann der Innenraum optional mehrere entsprechend ausgestaltete Halterungen aufweisen. Ebenso kann der Innenraum zusätzlich mindestens eine zur Aufnahme eines Ersatz- oder Zubehörteiles des Vermessungsgerätes ausgestaltete Halterung aufweisen.

Gemäss einer weiteren Ausführungsform umfasst der Schutzbehälter Überprüfungsmittel, wobei die Überprüfungsmittel eine Kamera, einen Annäherungssensor, einen Barcodescanner oder ein RFID-Lesegerät aufweisen, um ein Vorhandensein eines aufzunehmenden Vermessungsgerätes (bzw. die Vollständigkeit aller aufzunehmenden Teile) im Innenraum zu überprüfen und/oder die Identität des Vermessungsgerätes festzustellen.

Gemäss einer weiteren Ausführungsform weist der erfindungsgemässe Schutzbehälter Mittel zum Generieren eines kabellosen Datennetzwerkes im Innenraum auf, beispielsweise mittels Bluetooth oder eines WLAN-Signals.

Dabei ist die Kommunikationseinheit dazu ausgestaltet, z. B. über dieses kabellose Datennetzwerk, Daten mit dem Vermessungsgerät auszutauschen, wobei die Kommunikationseinheit dazu ausgestaltet ist, über das Funknetz abgerufene einsatzbezogene oder einsatzortbezogene Daten an das Vermessungsgerät weiterzuleiten und/oder von dem Vermessungsgerät empfangene Daten zu versenden, wobei die von dem Vermessungsgerät empfangenen Daten durch das Vermessungsgerät erfasste Entfernungen oder 3D-Koordinaten umfassen.

Erfindungsgemäss weist der erfindungsgemässe Schutzbehälter auf seiner äusseren Hülle eine Anzeigeeinheit in Form eines Touchscreens zum Anzeigen von Informationen über ein im Innenraum befindliches Vermessungsgerät auf, wobei die Kommunikationseinheit dazu ausgestaltet ist, die Informationen über das im Innenraum befindliche Vermessungsgerät der Anzeigeeinheit bereitzustellen.

Erfindungsgemäss ist die Versorgungseinheit zusätzlich auch zur Stromversorgung des Vermessungsgerätes im Innenraum mittels eines Kabels, mittels elektrischer Kontakte oder mittels Induktion ausgestaltet.

Diese Versorgungseinheit weist insbesondere einen Akkumulator, einen Strom-Generator eine Brennstoffzelle, Solarzellen, oder Mittel für eine externe Stromversorgung (z. B. einen Anschluss für ein Stromkabel, Induktionsspulen oder elektrische Kontakte) auf.

Erfindungsgemäss weist der Schutzbehälter Mittel zum Anzeigen eines Ladezustands des Vermessungsgeräts auf, wobei die Kommunikationseinheit zum Versenden von Informationen bezüglich des Ladezustands des Vermessungsgerätes, ausgestaltet ist.

Optional kann die Versorgungseinheit darüber hinaus zur Vorbereitung des Geräts auf den nächsten Einsatz das Laden des internen Akkumulators des Vermessungsgerätes initiieren. Zum Laden herangezogen werden könnten beispielsweise ein Akkumulator der Versorgungseinheit (als Not-Puffer), ein sich im Behälter befindlicher Ersatzakku des Vermessungsgerätes, der an die Behälterelektronik angeschlossen ist, oder eine externe Stromquelle, wie etwa ein Fahrzeugbordnetz.

Falls erkannt wird, dass der (Gesamt-)Ladezustand in an Betracht des geplanten Einsatzes kritisch ist, kann eine Warnung an den Benutzer ergehen. Nach dem Einsatz kann der Behälter den Ladezustand signalisieren und/oder den Anschluss an eine externe Stromquelle anfordern.

Gemäss einer anderen Ausführungsform ist die Kommunikationseinheit dazu ausgestaltet, eine Verbindung mit dem Internet herzustellen, und die Daten über das Internet abzurufen und zu versenden.

In einer Ausführungsform kann die Kommunikationseinheit zum Austausch von Daten eine Verbindung mit einer Kommunikationseinheit mindestens eines weiteren Schutzbehälters aufnehmen.

In einer Ausführungsform kann die Kommunikationseinheit zum Austausch von Daten eine Verbindung mit einem weiteren Vermessungsgerät aufnehmen, welches nicht über einen eigenen Schutzbehälter mit Kommunikationseinheit verfügt.

Gemäss einer anderen Ausführungsform ist die Kommunikationseinheit dazu ausgestaltet, eine Verbindung mit einem den Schutzbehälter aufnehmenden Transportmittel, insbesondere Fahrzeug, herzustellen. Beispielsweise kann auf Daten eines Navigationssystems des Fahrzeugs zugreifbar sein, oder ein lokales Netzwerk (z. B. WLAN oder Bluetooth) des Fahrzeugs zur Kommunikation über das Internet verwendet werden.

Gemäss einer weiteren Ausführungsform ist die Kommunikationseinheit dazu ausgestaltet, die Daten selbsttätig abzurufen und/oder selbsttätig zu versenden, insbesondere von einem bzw. an einen externen Servercomputer.

Gemäss einer weiteren Ausführungsform ist die Kommunikationseinheit dazu ausgestaltet, Lokalisierungsdaten über das Funknetz abzurufen.

Gemäss einer weiteren Ausführungsform weist der Schutzbehälter eine GNSS-Empfangseinheit zur Positionsbestimmung des Behälters mittels eines globalen Navigationssatellitensystems auf, wobei die Kommunikationseinheit dazu ausgestaltet ist, die Lokalisierungsdaten von der GNSS-Empfangseinheit zu empfangen.

In einer Ausführungsform des erfindungsgemässen Behälters ist die Kommunikationseinheit dazu ausgestaltet, basierend auf den abgerufenen Daten eine zumindest grobe Position des Schutzbehälters zu ermitteln. Dabei ist die Position des Behälters insbesondere auf mindestens dreihundert Meter genau ermittelbar ist, vorzugsweise auf mindestens dreissig Meter genau. Optional kann die Kommunikationseinheit dazu ausgestaltet sein, basierend auf einer Vielzahl von abgeleiteten Positionen des Behälters ein Bewegungsprofil zu erstellen. In einer weiteren Ausführungsform des erfindungsgemässen Schutzbehälters ist die Kommunikationseinheit dazu ausgestaltet, basierend auf der ermittelten Position des Schutzbehälters und auf einem bekannten Einsatzort des Vermessungsgerätes eine Restzeit bis zu einer Ankunft des Behälters am Einsatzort zu ermitteln, d. h. insbesondere zu berechnen oder zu schätzen. Dabei sind durch die Kommunikationseinheit vorzugsweise solche Daten abrufbar, aus denen der Einsatzort ermittelbar ist.

Die Kommunikationseinheit kann ausserdem dazu ausgestaltet sein, Daten mit dem Vermessungsgerät auszutauschen und basierend auf einer ermittelten Restzeit selbsttätig das Vermessungsgerät einzuschalten und/oder einsatzortbezogene Daten an das Vermessungsgerät zu übermitteln.

In einer weiteren Ausführungsform weist der erfindungsgemässe Schutzbehälter zur Regelung einer Temperatur des Innenraumes bzw. des Vermessungsgerätes eine Temperaturregelungseinheit auf mit einer Temperaturerfassungseinheit und einer Heiz- und/oder Kühlfunktion. Die Kommunikationseinheit ist in dieser Ausführungsform dazu ausgestaltet, basierend auf einer ermittelten Restzeit einen Befehl an die Temperaturregelungseinheit zu geben, die Temperatur des Innenraumes bzw. des Vermessungsgerätes einer optimalen Betriebstemperatur des Vermessungsgerätes anzunähern oder anzugleichen.

Optional weist der Schutzbehälter eine Trocknungsfunktionalität auf, um ein nass eingelegtes Vermessungsgerät zu trocknen.

Gemäss einer weiteren Ausführungsform ist die Kommunikationseinheit des Behälters dazu ausgestaltet, basierend auf einer ermittelten Position des Behälters einen Befehl an den Schliessmechanismus des Behälters zu senden. Der Schliessmechanismus ist gemäss dieser Ausführungsform dazu ausgestaltet, in Abhängigkeit von dem von der Kommunikationseinheit erhaltenen Befehl, ein bestimmungsgemässes Öffnen des Behälters durch einen Benutzer zu verhindern oder zu ermöglichen, und/oder den Behälter selbsttätig zu öffnen. Wird ein Öffnen verhindert, kann beispielsweise eine Codeeingabe durch den Benutzer erforderlich sein, um den Behälter zu öffnen, oder ein Transport an einen anderen Ort.

In einer Ausführungsform ist die Kommunikationseinheit des Behälters dazu ausgestaltet, einen Befehl an ein im Innenraum befindliches Vermessungsgerät zu senden, einen Sperrmodus zu aktivieren (bzw. einen voreingestellten Sperrmodus zu deaktivieren), in welchem wesentliche Funktionen des Vermessungsgerätes nicht zur Verfügung stehen, insbesondere bis zu einer Freischaltung des Vermessungsgerätes mittels eines Entsperrcodes.

Gemäss einer weiteren Ausführungsform des erfindungsgemässen Schutzbehälters sind durch die Kommunikationseinheit solche Daten abrufbar, aus denen ein Vorliegen oder Nichtvorliegen einer Nutzungsberechtigung des Vermessungsgerätes ermittelbar ist, und die Kommunikationseinheit ist dazu ausgestaltet, basierend auf den Daten das Vorliegen oder Nichtvorliegen einer Nutzungsberechtigung des Vermessungsgerätes zu ermitteln. Die Daten sind dabei insbesondere über das Internet von einem externen Server abrufbar.

Der Schutzbehälter kann optional Mittel aufweisen, die dazu ausgestaltet sind, einen Öffnungsversuch des Schliessmechanismus zu erkennen und an die Kommunikationseinheit zu melden.

In einer weiteren Ausführungsform weist der Schutzbehälter eine automatisch ablaufende Diebstahlschutzfunktionalität auf, im Rahmen derer die Kommunikationseinheit - insbesondere wenn ein Nichtvorliegen einer Nutzungsberechtigung des Vermessungsgerätes ermittelt wurde - dazu ausgestaltet ist,
- eine Position des Behälters an einen externen Server zu übermitteln;
- einen Befehl an ein im Innenraum befindliches Vermessungsgerät zu senden, einen Sperrmodus zu aktivieren (bzw. einen voreingestellten Sperrmodus zu deaktivieren), in welchem
zumindest wesentliche Funktionen des Vermessungsgerätes nicht zur Verfügung stehen, insbesondere bis zu einer Freischaltung des Vermessungsgerätes mittels eines Entsperrcodes;
- einen Befehl an den Schliessmechanismus zu senden, und der Schliessmechanismus dazu ausgestaltet ist, in Abhängigkeit von dem von der Kommunikationseinheit erhaltenen Befehl ein bestimmungsgemässes Öffnen des Behälters durch einen Benutzer zu verhindern;
- einen Befehl an eine Alarmeinheit des Behälters zu senden, und die Alarmeinheit dazu ausgestaltet ist, in Abhängigkeit von dem von der Kommunikationseinheit erhaltenen Befehl ein optisches und/oder akustisches Warnsignal auszugeben;
- einen Befehl an eine Selbstzerstörungseinheit des Behälters zu senden, und die Selbstzerstörungseinheit dazu ausgestaltet ist, in Abhängigkeit von dem von der Kommunikationseinheit erhaltenen Befehl ein im Innenraum befindliches Vermessungsgerät bzw. wesentliche Teile desselben dauerhaft unbrauchbar zu machen oder zu zerstören, und/oder
- einen Befehl an eine Markierungseinheit des Behälters zu senden, und die Markierungseinheit dazu ausgestaltet ist, in Abhängigkeit von dem von der Kommunikationseinheit erhaltenen Befehl ein im Innenraum befindliches Vermessungsgerät optisch (z. B. als gestohlen) zu markieren.

Der Schutzbehälter kann Mittel aufweisen, die dazu ausgestaltet sind, ein nicht-bestimmungsgemässes, insbesondere gewaltsames, Öffnen des Behälters (z. B. ein Aufbrechen des Schliessmechanismus oder der äusseren Hülle) zu erkennen.

Alternativ kann bei Vorliegen einer Nutzungsberechtigung, basierend auf zeit-, orts-, einsatz-, oder personenbezogenen Informationen auch ein Befehl an ein im Innenraum befindliches Vermessungsgerät gesendet werden (z. B. von einem Server empfangene Lizenzcodes), um eine oder mehrere Funktionen freizuschalten. Ansonsten bleibt das Vermessungsgerät gesperrt oder nur eingeschränkt funktionstüchtig.

In einer weiteren Ausführungsform ist der Schutzbehälter mit zusätzlichen Sensoren zur Erfassung und Aufzeichnung von Umwelteinflüssen, wie z. B. Feuchtigkeit, Temperatur, Erschütterungen und Stössen ausgestattet, welche die Kommunikationseinheit regelmässig oder nach Abruf bereitstellt oder an einen zentralen Server übermittelt. Dies kann insbesondere dazu dienen, unsachgemässe Transport- und Lagerbedingungen festzustellen, vor möglichen Beeinträchtigungen des Funktionszustandes (Kalibrierung) zu warnen, oder die gewonnen Informationen bei der Beurteilung von Garantiefällen heranzuziehen.

Ein nicht zur beanspruchten Erfindung gehörendes Beispiel betrifft ein System von mindestens zwei erfindungsgemässen Schutzbehältern. In den Schutzbehältern des Systems ist die Kommunikationseinheit jeweils dazu ausgestaltet, eine Verbindung mit Kommunikationseinheiten anderer Schutzbehälter herzustellen und Daten auszutauschen, die mindestens Informationen über im Innenraum der Schutzbehälter befindliche Vermessungsgeräte beinhalten. Dabei beinhalten die Daten beispielsweise mindestens Informationen über ein Vorhandensein bzw. eine Vollständigkeit sowie eine Identität der Vermessungsgeräte. Die Daten sind insbesondere mittels einer WPAN- oder WLAN-Verbindung austauschbar. Vorzugsweise kann mindestens eine erste Kommunikationseinheit dazu ausgestaltet sein, über das Funknetz abgerufene Daten an andere Kommunikationseinheiten weiterzuleiten, und von anderen Kommunikationseinheiten erhaltene Daten über das Funknetz zu versenden.

Ein nicht zur beanspruchten Erfindung gehörendes Beispiel betrifft ein Verfahren zum Vorbereiten eines Vermessungsgerätes während eines Transports des Vermessungsgerätes in einem Innenraum eines Behälters auf einen Einsatz an einem bekannten Einsatzort. Der Behälter ist dabei insbesondere ein Vermessungsgerätschutzbehälter gemäss dem ersten Aspekt der Erfindung. Das Verfahren umfasst
- ein Abrufen von Lokalisierungsdaten, die eine zumindest grobe Lokalisierbarkeit bereitstellen,
- ein Ermitteln, basierend auf den Lokalisierungsdaten, einer zumindest groben Position des Vermessungsgerätes, und
- ein Ermitteln, basierend auf der ermittelten Position und dem bekannten Einsatzort, einer Restzeit bis zu einer Ankunft am Einsatzort.

Dabei wird, basierend auf der ermittelten Restzeit, das Vermessungsgerät eingeschaltet, insbesondere wobei einsatzortbezogene Daten an das Vermessungsgerät übermittelt werden. Alternativ wird, basierend auf der ermittelten Restzeit, ein Akku des Vermessungsgerätes geladen. Alternativ oder zusätzlich wird, basierend auf der ermittelten Restzeit, eine Temperatur des Innenraumes bzw. des Vermessungsgerätes einer optimalen Betriebstemperatur des Vermessungsgerätes angenähert oder angeglichen.

Ein nicht zur beanspruchten Erfindung gehörendes Beispiel betrifft ein Verfahren zum Verhindern einer unberechtigten Verwendung eines in einem Behälter, insbesondere einem tragbaren Vermessungsgerätschutzbehälter gemäss dem ersten Aspekt der Erfindung, befindlichen Vermessungsgerätes. Das Verfahren umfasst ein Abrufen von Daten über ein Funknetz und ein Ermitteln, basierend auf den Daten, ob eine orts-, zeit- oder personenbezogene Nutzungsberechtigung für das Vermessungsgerät vorliegt. Wenn diese Nutzungsberechtigung nicht vorliegt, wird ein bestimmungsgemässes Öffnens des Behälters verhindert, und/oder wesentliche Funktionen des Vermessungsgerätes werden deaktiviert, wobei diese beispielsweise bis zu einer Freischaltung mittels eines Entsperrcodes nicht zur Verfügung stehen.

In einer Ausführungsform weist dieses Verfahren eine automatisch ablaufende Diebstahlschutzfunktionalität auf, im Rahmen derer
- basierend auf den Daten eine Position ermittelt wird und die Position an einen externen Server übermittelt wird;
- ein optisches und/oder akustisches Warnsignal ausgegeben wird;
- das Vermessungsgerät optisch markiert wird; und/oder
- das Vermessungsgerät unbrauchbar gemacht wird, insbesondere dadurch, dass wesentliche Funktionen des Vermessungsgerätes deaktiviert werden, wobei diese insbesondere bis zu einer Freischaltung mittels eines Entsperrcodes nicht zur Verfügung stehen, oder dauerhaft zerstört werden.

Optional kann dabei ein nicht-bestimmungsgemässes, insbesondere gewaltsames, Öffnen des Behälters erkennbar sein, wobei die Diebstahlschutzfunktionalität bei Erkennen eines nicht-bestimmungsgemässen Öffnens des Behälters automatisch ausgelöst wird.

Der erfindungsgemässe Vermessungsschutzbehälter und die Schutzverfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: eine Totalstation als Beispiel für ein in einem erfindungsgemässen Schutzbehälter transportierbares Vermessungsgerät;
- Fig. 2a-b: eine beispielhafte Ausführungsform eines erfindungsgemässen Schutzbehälters im geöffneten Zustand zur Aufnahme der Totalstation aus Fig. 1;
- Fig. 3: ein Kommunizieren einer Kommunikationseinheit des Schutzbehälters mit einem externen Server über das Internet;
- Fig. 4: ein Kommunizieren der Kommunikationseinheit mit anderen Komponenten des Schutzbehälters und mit dem transportierten Vermessungsgerät;
- Fig. 5: ein Flussdiagramm zur Illustration eines Verfahrens zum selbsttätigen Vorbereiten eines transportierten Vermessungsgerätes auf einen Einsatz durch den Schutzbehälter;
- Fig. 6: ein Flussdiagramm zur Illustration eines Verfahrens zum ortsabhängigen Verhindern der Entnahme des transportierten Vermessungsgerätes; und
- Fig. 7: ein Flussdiagramm zur Illustration eines Verfahrens zum Schutz des transportierten Vermessungsgerätes vor Diebstahl.

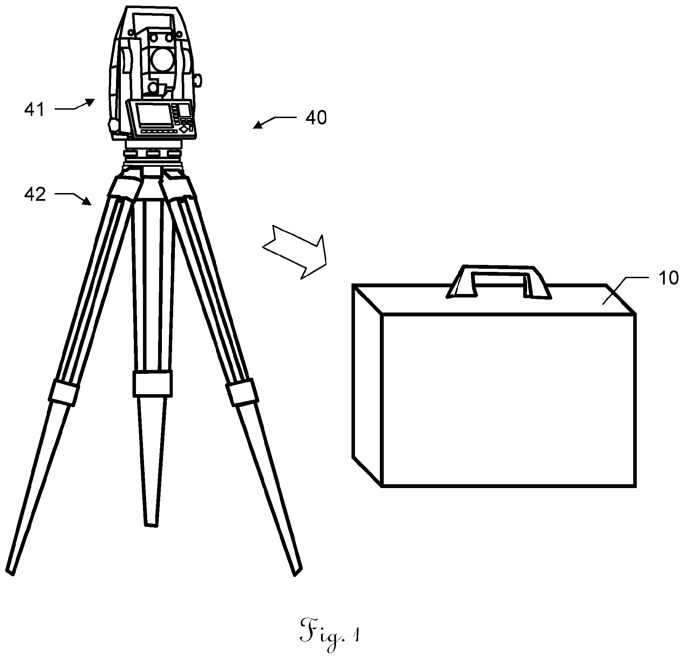

Figur 1 zeigt einen als Koffer 10 als erfindungsgemässen Schutzbehälter zum Transport eines Vermessungsgerätes. Als zu transportierendes Vermessungsgerät ist hier rein beispielhaft eine Totalstation 40 dargestellt. Diese ist in einen Oberteil 41 und eine Stativeinheit 42 zerlegbar.

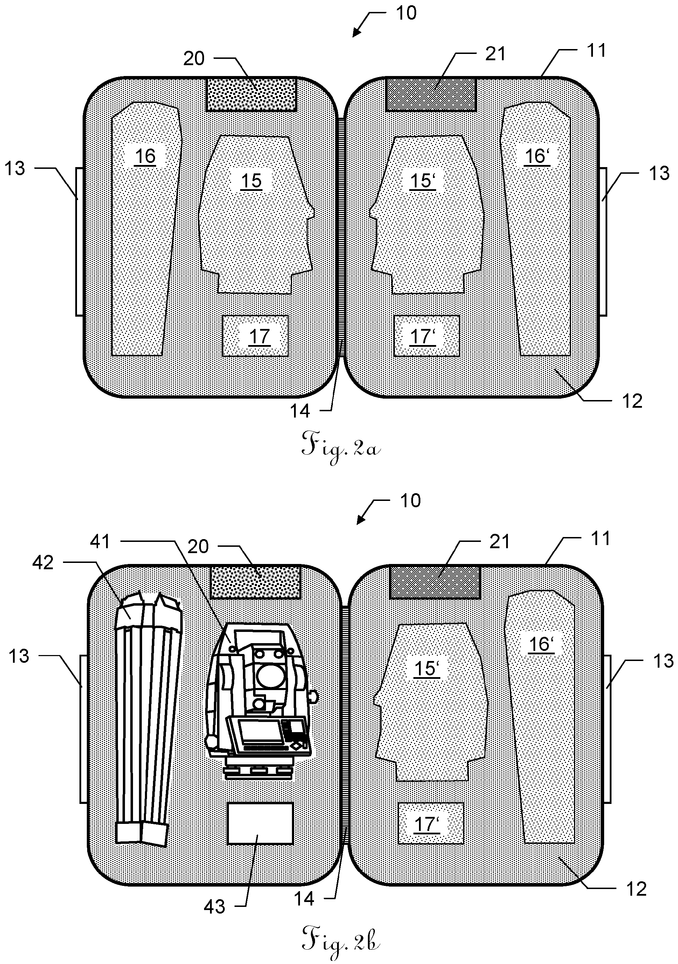

In den Figuren 2a und 2b ist eine beispielhafte Ausführungsform des als Koffer 10 ausgestalteten Schutzbehälters dargestellt. Dabei zeigt Figur 2a einen aufgeklappten leeren Koffer 10, und Figur 2b denselben Koffer mit eingesetzten Komponenten und Zubehörteilen einer Totalstation 41-43.

Der erfindungsgemässe Schutzbehälter 10 weist einen Schliessmechanismus 13 auf, mittels welchem der Schutzbehälter verschlossen werden kann. Beispielsweise kann der Schliessmechanismus 13 mittels Schlüssel zu öffnen und schliessen sein oder ein mechanisches oder elektronisches Zahlenschloss oder auch einen Fingerabdruckscanner aufweisen. Es sind aber generell auch andere Arten von Schliessmechanismus denkbar. Erfindungsgemäss weist der Behälter 10 ausserdem eine Kommunikationseinheit 20 auf, die zum Aufbau einer Kommunikationsverbindung über ein Funknetz ausgestaltet ist. Dazu weist die Kommunikationseinheit 20 beispielsweise eine SIM-Karte und eine Mobilfunkantenne auf. Alternativ oder zusätzlich kann eine Verbindung über ein lokales Netzwerk wie z. B. WLAN aufgebaut werden. Optional kann die Kommunikationseinheit 20 zusätzlich eine GNSS-Empfangseinheit zur Positionsbestimmung des Behälters mittels eines globalen Navigationssatellitensystems (z. B. GPS) aufweisen.

Wie in Figur 2a rein beispielhaft dargestellt, kann der Schutzbehälter 10 als ein Koffer ausgestaltet sein, dessen zwei Hälften mittels eines Scharniers 14 auseinandergeklappt werden können, um den Koffer so zu öffnen. Der Koffer weist eine Hülle 11 auf, die vorzugsweise stabil und wasserfest ausgestaltet ist und die einen Innenraum 12 des Koffers vollständig umschliesst. In dem Innenraum 12 sind Halterungen vorgesehen, um das Vermessungsgerät, bzw. dessen Komponenten und Zubehör- bzw. Ersatzteile aufzunehmen und vorzugsweise zu fixieren. In dem hier gezeigten Beispiel sind diese Halterungen als Aussparungen 15-17, 15'-17' in einem mit einem weichen aber formstabilen Schaumstoff ausgeführt, der im wesentlichen den gesamten Innenraum 12 ausfüllt. Alternativ kann der Innenraum auch durch Blasformen (z. B. Extrusions- oder Streckblasformen) in eine entsprechende Form gebracht werden.

Die Aussparungen 15-17, 15'-17' befinden sich in beiden Kofferhälften und sind den zu transportierenden Komponenten und Teilen des Vermessungsgerätes entsprechend geformt. Des weiteren weist der Koffer eine Batterie bzw. einen Akkumulator 21 zur Stromversorgung der Kommunikationseinheit 20 auf. Die Kommunikationseinheit 20 ist so im Innenraum 12 angebracht und die Hülle 11 ist so ausgestaltet, dass eine Kommunikation der Kommunikationseinheit 20 über ein externes Funknetz ermöglicht wird. Insbesondere kann dazu eine Antenne der Kommunikationseinheit 20 in die Hülle 11 integriert sein.

In Figur 2b sind ein Oberteil 41 und eine Stativeinheit 42 der Totalstation 40 aus Figur 1 in zwei der Aussparungen 15, 16 der ersten Kofferhälfte eingefügt. Die dritte Aussparung 17 hat als Zubehörteil der Totalstation einen Akku 43 aufgenommen. Die Aussparungen 15'-17' der zweiten Kofferhälfte nehmen bei einem Schliessen des Koffers 10 die überstehenden Teile der Totalstation-Komponenten 41-43 auf.

Um die Laufzeit des Akkus 43 zu verlängern, können vorzugsweise verschiedene Mittel zum Energy Harvesting vorhanden sein. Ebenso kann die Kommunikationseinheit energiesparende Betriebsarten aufweisen, z. B. einen periodischen Betrieb mit regelmässigen Inaktivitätsphasen (Schlafzyklen).

Vorzugsweise kann der Behälter einen Anschluss für eine externe Stromversorgung aufweisen (hier nicht dargestellt). Dies kann zum einen ein einfacher Anschluss für ein Stromkabel sein, zum anderen auch speziell konzipierte Kontakte oder Induktionsspulen, die ebenso speziell ausgestaltete Gegenstücke haben, die ein Aufladen für einen Benutzer besonders einfach machen. Diese Gegenstücke können zum Beispiel in einem Fahrzeug verbaut sein, das die Behälter transportiert oder Teil der Regale sein, in denen die Behälter gelagert werden, wenn sie nicht gebraucht werden, so dass die Geräte stets einsatzbereit sind, ohne sie aus dem Behälter entfernen zu müssen.

Der Akku 43 kann auch zur Stromversorgung des transportierten Vermessungsgerätes 40 verwendet werden. Insbesondere kann während eines Transports der Akku des Gerätes geladen werden. Der Behälter weist dazu im Innenraum entsprechende Mittel zur Stromversorgung des Vermessungsgerätes 40 auf. Diese können ein passendes Kabel beinhalten, dass vom Benutzer in das Vermessungsgerät 40 einzustecken ist, oder in den entsprechenden Aussparungen befindliche elektrische Kontakte, die beim Einlegen des Gerätes 40 automatisch mit entsprechenden Kontakten des Gerätes in Berührung kommen, sodass ein Strom fliessen kann. Ebenso kann eine Induktionsspule vorhanden sein, mittels welcher elektrische Energie in ein in den Behälter eingelegtes Vermessungsgerät übertragbar ist.

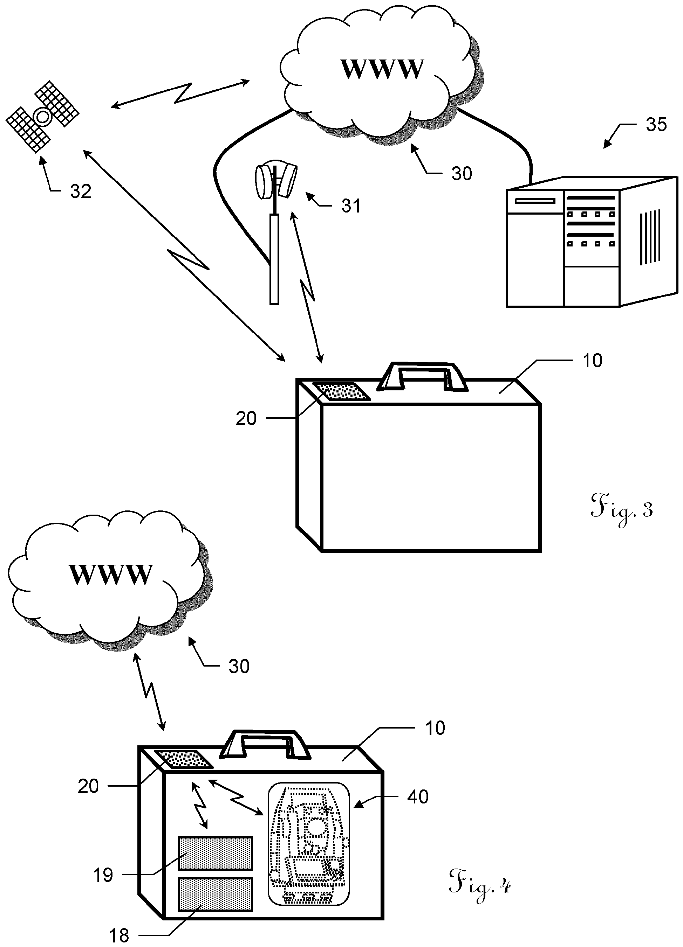

Figur 3 illustriert beispielhaft eine Kommunikation der Kommunikationseinheit 20 des Schutzbehälters 10 über das externe Funknetz. Dieses ist im dargestellten Beispiel ein Mobilfunknetz, und die Kommunikationseinheit 20 weist eine SIM-Karte auf, um über das Mobilfunknetz Daten austauschen zu können. Über Mobilfunkmasten 31 kann eine Verbindung mit einem terrestrischen Mobilfunknetz hergestellt werden, über Satelliten 32 mit einem satellitengestützten. Insbesondere können dann über das Internet 30 Daten mit einem externen Servercomputer 35 ausgetauscht werden. Durch die Verbindung mit dem Mobilfunknetz ist eine grobe Echtzeit-Lokalisierung des Behälters möglich, beispielsweise über GSM-Ortung.

Figur 4 illustriert beispielhaft eine interne Kommunikation der Kommunikationseinheit 20 des Schutzbehälters 10. Zusätzlich zur in Figur 3 illustrierten externen Kommunikationsfähigkeit verfügt die Kommunikationseinheit 20 auch über eine interne Kommunikationsfähigkeit. So kann die Kommunikationseinheit 20 einerseits mit anderen Einheiten des Schutzbehälters 10 kommunizieren und andererseits über ein internes Funknetz - beispielsweise über WLAN oder Bluetooth - mit einem im Innenraum des Behälters transportierten Vermessungsgerät 40.

Als andere Einheiten des Schutzbehälters 10 sind hier rein beispielhaft eine Temperaturregelungseinheit 18 und eine Alarmeinheit 19 gezeigt.

Die Temperaturregelungseinheit 18 weist einerseits einen Temperaturfühler auf, der dazu ausgestaltet ist, eine Temperatur des Innenraums 12 zu erfassen; vorzugsweise kann er so angebracht sein, dass er eine Temperatur des Vermessungsgerätes 40 erfassen kann. Optional kann ein zweiter Temperaturfühler eine Aussentemperatur erfassen. Andererseits weist die Temperaturregelungseinheit 18 eine Heiz- und/oder Kühlfunktion auf, um die Temperatur des Innenraumes 12 bzw. des Vermessungsgerätes 40 zu erhöhen oder abzusenken. Beispielsweise kann die Temperatur während des gesamten Transports in einem bestimmten Bereich gehalten werden, um eine Beschädigung des Vermessungsgerätes 40 zu verhindern, oder das Vermessungsgerät 40 kann bereits vor Einsatzbeginn auf eine optimale Betriebstemperatur gebracht werden, um Verschleiss bzw. Wartezeiten zu reduzieren.

Alternativ oder zusätzlich zu dieser Temperaturregelungseinheit 18 kann auch eine Trocknungseinheit vorgesehen sein, die ein nach einem Einsatz nass im Behälter verpacktes Vermessungsgerät (z. B. nach einem Einsatz bei Regenwetter) trocknen kann. Dazu kann die Trocknungseinheit beispielsweise als Teil der Temperaturregelungseinheit 18 ausgeführt sein und mittels Heizfunktion und Ventilation die Feuchtigkeit aus dem Behälterinnenraum an die Umgebung abführen. Alternativ kommen auch andere Trocknungsmöglichkeiten in Frage wie Kondensationstrocknung oder Granulattrocknung.

Die Alarmeinheit 19 kann beispielsweise Leuchtmittel oder Lautsprecher aufweisen, um bei Bedarf optische oder akustische Warnsignale auszugeben.

Die Kommunikationseinheit 20 kann über die externe Funkverbindung beispielsweise über das Internet 30 Daten empfangen und diese an das Vermessungsgerät 40 über das interne Netzwerk weiterleiten. So kann die Kommunikationseinheit 20 beispielsweise einsatzbezogene oder einsatzortbezogene Daten abrufen und dem Gerät vor einem Einsatz zur Verfügung stellen, so dass diese direkt nach der Entnahme des Vermessungsgerätes 40 aus dem Behälter 10 am Einsatzort zur Verfügung stehen. Andersherum können auch Daten des Vermessungsgerätes 40 (z. B. bei einem vorherigen Einsatz erfasste Entfernungen oder 3D-Koordinaten) über das interne Funknetz an die Kommunikationseinheit 20 übermittelt werden und von dieser über das Internet 30 an einen externen Server weitergeleitet werden.

Die Kommunikationseinheit 20 ist vorzugsweise in der Lage, solche Daten über das Funknetz abzurufen, mittels welchen zumindest eine grobe Lokalisierung des Behälters 10 möglich ist.

Dadurch ist es beispielsweise möglich, zu ermitteln, ob sich der Behälter 10 einem zuvor definierten Einsatzort des Vermessungsgerätes 40 nähert, und es kann ein voraussichtlicher Zeitpunkt des Eintreffens am Einsatzort geschätzt bzw. berechnet werden. Darauf basierend kann die Kommunikationseinheit 20 beispielsweise einen Befehl an die Temperaturregelungseinheit 18 geben, das Vermessungsgerät 40 auf eine optimale Betriebstemperatur vorzuwärmen, oder das Gerät einschalten oder einsatz- oder einsatzortbezogene Daten an das Gerät übermitteln.

Ausserdem kann die Kommunikationseinheit 20 von dem Vermessungsgerät 40 selbst oder über das Internet 30 von einem externen Server Lizenzdaten des Gerätes abrufen, aus denen hervorgeht, in welchen Ländern oder Regionen das transportierte Gerät verwendet werden darf ("Geofencing"). Basierend auf den abgerufenen Lokalisierungsdaten kann die Kommunikationseinheit 20 erkennen, ob das Vermessungsgerät 40 am aktuellen Ort verwendet werden darf. Wenn dies nicht der Fall ist, kann die Kommunikationseinheit 20 z. B. einen Befehl an die Schliesseinheit ausgeben, ein Öffnen durch einen Benutzer zu verhindern, und einen Befehl an die Alarmeinheit 19, bei einem Öffnungsversuch einen Alarm auszulösen bzw. den Benutzer über die Gründe der Nichtöffenbarkeit des Behälters 10 zu informieren.

Alternativ kann die Kommunikationseinheit 20 beispielsweise einen Befehl an das Vermessungsgerät 40 senden, nicht zu funktionieren, bis ein Freischalte-Code eingegeben wird. Ebenso kann der Freischalte-Code am Behälter einzugeben sein, um diesen öffnen zu können. Alternativ kann automatisch eine Information über die Entnahme des Gerätes 40 durch die Kommunikationseinheit 20 an den externen Server gesendet werden, der dann automatisch eine Gebühr von einem Benutzerkonto erhebt.

Vorzugsweise weist der Behälter 10 Mittel auf, um das im Innenraum befindliche Vermessungsgerät bzw. dessen Zubehör zu erkennen. Diese Mittel können beispielsweise RFID-Lesegeräte sein oder umfassen. Vorteilhaft kann so auch vollautomatisch eine Vollständigkeitsprüfung erfolgen. So kann z. B. vor einem Vermessungsauftrag mit diesem abgeglichen werden, ob alle benötigten Teile dabei sind, oder nach Beendigung des Auftrags, ob alle Teile wieder im richtigen Behälter verstaut wurden. Ausserdem kann bei einer Auslieferung ab Werk eine finale berührungslose Prüfung stattfinden, on der Lieferumfang korrekt ist.

Die zentrale Erfassung des Inventars und dessen Aufenthaltsort und Zustand, ist ein wichtiger Nutzen vor allem für das Flottenmanagement von Rental-Firmen und grösseren Dienstleistern oder Baufirmen. Des weiteren können diese Informationen für eine vereinfachte Abrechnung verwenden werden ("pay per use").

Erfindungsgemäss sind auf der Aussenhülle des Schutzbehälters 10 Mittel zur Anzeige von Informationen in Form eines Touchscreens angebracht (hier nicht dargestellt). Die darauf angezeigten Informationen können insbesondere den Inhalt des Behälters oder Zustandsparameter oder Konfigurationen der beinhalteten Geräte oder Zubehöre Erfindungsgemäss wird ein Ladezustand des Vermessungsgeräts angezeigt. Ausserdem können ein Ladezustand einer Batterie des Behälters oder weitere Informationen über Mieter und Besitzer, Auftrags-ID, Rückgabetermin oder ähnliches anzeigbar sein.

Diagnostische Informationen - z. B. von Umweltsensoren erfasste Daten oder Informationen über eine Betriebsdauer des Vermessungsgerätes - können an einen zentralen Server versand werden und so einer zentral optimierten Wartungs- und Instandhaltungsplanung Vorschub leisten. Auch Ferndiagnose bzw. -wartung des Vermessungsgerätes sind möglich.

Optional können mehrere Behälter 10 miteinander kommunizieren. Ein solches System von Schutzbehältern kann beispielsweise dazu dienen, vor Fahrtantritt automatisch zu prüfen, ob alle für einen Vermessungsauftrag nötigen Geräte an Bord sind, oder nach Beendigung des Vermessungsauftrags, ob alle verwendeten Geräte wieder verladen sind, ohne die Behälter öffnen zu müssen. Beispielsweise kann dazu einer der Behälter als Master dienen, dessen Kommunikationseinheit eine Liste der zu transportierenden Teile - z. B. über das Funknetz - zur Verfügung gestellt wird, und die diese Liste dann mit den einzelnen Vollständigkeits- und Identitätsprüfungen der Behälter abgleicht und das Ergebnis - z. B. erneut über das Funknetz - einem Benutzer mitteilt.

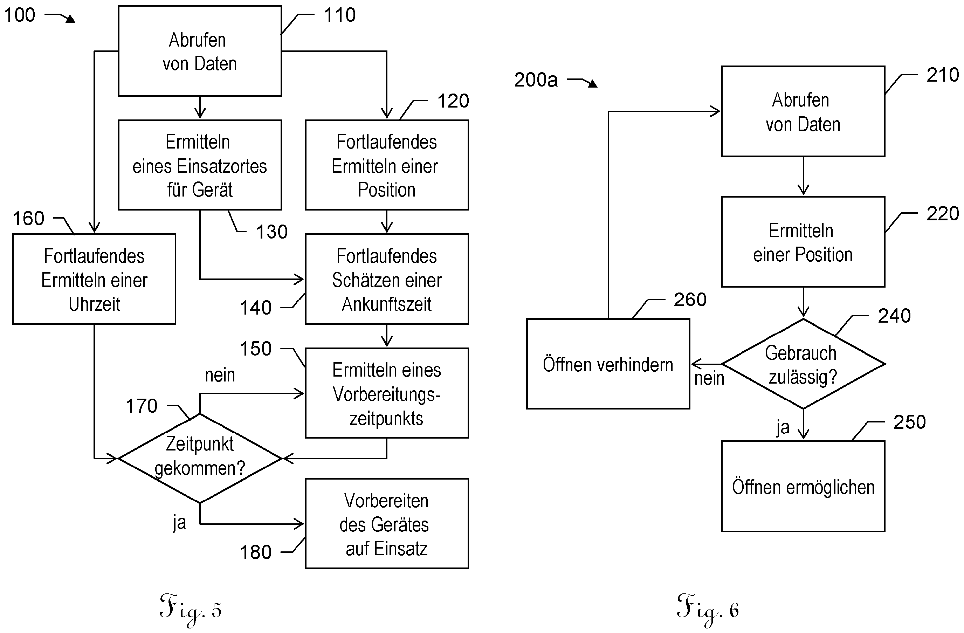

Figur 5 zeigt ein Flussdiagramm zur Illustration einer beispielhaften Ausführungsform eines Verfahrens 100 zum Vorbereiten eines Vermessungsgerätes während eines Transports des Vermessungsgerätes 40 in einem Innenraum 12 eines Behälters 10 auf einen Einsatz an einem bekannten Einsatzort.

Gemäss dem dargestellten Verfahren 100 werden Daten über ein Funknetz abgerufen 110, die unter anderem eine Groblokalisierbarkeit des Vermessungsgerätes bzw. des Behälters bereitstellen (Lokalisierungsdaten). Alternativ können diese Daten auch über ein GNSS-Empfangsmodul empfangbar sein. Basierend auf den abgerufenen Daten wird fortlaufend eine zumindest grobe Position ermittelt 120. Ausserdem wird ein Einsatzort des Vermessungsgerätes ermittelt 130 - beispielsweise ebenfalls aus den abgerufenen Daten oder durch eine Benutzereingabe. Basierend auf der ermittelten Position und dem bekannten Einsatzort wird dann die Restzeit bis zu einer Ankunft am Einsatzort geschätzt 140. In Abhängigkeit von einer bekannten benötigten Vorbereitungszeit wird ein Zeitpunkt ermittelt 150, zu dem mit dem Vorbereiten des Gerätes begonnen werden soll. Gleichzeitig kann fortlaufend (z. B. aus den abgerufenen Daten) eine aktuelle Uhrzeit ermittelt werden 160. Wenn erkannt wird 170, dass der Zeitpunkt zum Vorbereiten des Gerätes gekommen ist, wird das Vermessungsgerät, insbesondere vollautomatisch, auf seinen Einsatz vorbereitet 180. Wie bereits weiter oben beschrieben, kann dazu beispielsweise das Vermessungsgerät eingeschaltet werden, und einsatz- oder einsatzortbezogene Daten an das Vermessungsgerät übermittelt werden. Alternativ oder zusätzlich kann das Vorbereiten ein Aufladen eines Akkus des Vermessungsgerätes oder ein Annähern oder Angleichen der Temperatur im Innenraum des Behälters einer bekannten optimalen Betriebstemperatur des Vermessungsgerätes beinhalten.

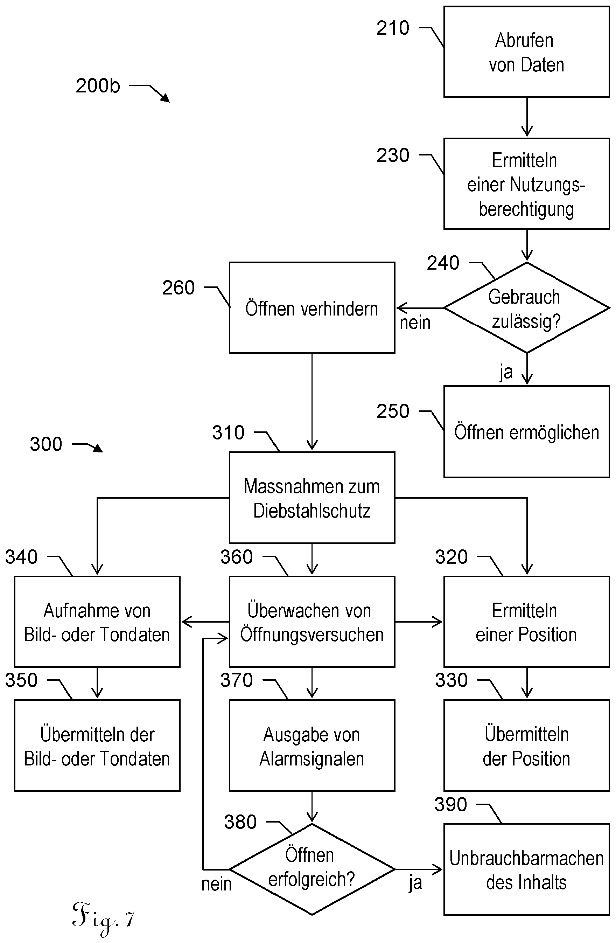

Die Figuren 6 und 7 zeigen jeweils ein Flussdiagramm zur Illustration zweier Ausführungsformen eines Verfahrens 200 zum Verhindern einer unberechtigten Entnahme eines Vermessungsgerätes aus einem Behälter.

In Figur 6 wird eine erste Ausführungsform 200a illustriert. Gemäss dieser Ausführungsform des Verfahrens werden Daten über ein Funknetz abgerufen 210, die unter anderem eine Groblokalisierbarkeit des Vermessungsgerätes bzw. des Behälters bereitstellen. Basierend auf den abgerufenen Daten wird fortlaufend eine zumindest grobe Position ermittelt 220. Wie bereits weiter oben beschrieben, wird anschliessend basierend auf den Daten ermittelt 240, ob eine Nutzungsberechtigung für das im Behälter befindliche Vermessungsgerät am gegenwärtigen Ort vorliegt, also ob der Gebrauch zulässig ist.

Ist dies der Fall, wird dem Benutzer das Öffnen des Behälters und damit die Entnahme des Vermessungsgerätes ermöglicht 250. Ist dies nicht der Fall, wird das Öffnen hingegen verhindert 260.

In Figur 7 wird eine zweite Ausführungsform 200b illustriert. Diese weist zusätzlich zur ersten Ausführungsform eine Diebstahlschutzfunktionalität 300 auf. Gemäss dieser Ausführungsform des Verfahrens werden Daten über ein Funknetz abgerufen 210. Basierend auf diesen Daten kann ermittelt werden 230, ob aktuell eine Nutzungsberechtigung für das Vermessungsgerät vorliegt, also beispielsweise ob das Gerät legal verwendet wird oder als gestohlen gemeldet wurde. Basierend auf den Daten wird ermittelt 240, ob eine Nutzungsberechtigung für das im Behälter befindliche Vermessungsgerät zum gegenwärtigen Zeitpunkt vorliegt, also ob der Gebrauch zulässig ist. Ist dies der Fall, wird dem Benutzer das Öffnen des Behälters und damit die Entnahme des Vermessungsgerätes ermöglicht 250.

Ist dies nicht der Fall, wird das Öffnen hingegen verhindert 260. Ausserdem werden im Rahmen der Diebstahlschutzfunktionalität 300 selbsttätig weitere Massnahmen 310 ergriffen. Diese Maßnahmen können beispielsweise das Ermitteln 320 einer Position und das Übermitteln dieser Position über das Funknetz an einen externen Server beihalten. Ausserdem kann eine Aufnahme 340 von Bild- und Tondaten zur Identifizierung der unrechtmässigen Besitzer und das Übermitteln dieser Bild- und Tondaten über das Funknetz an den externen Server erfolgen. Diese Maßnahmen können zum einen kontinuierlich erfolgen und sofort, nachdem ein Diebstahl erkannt wurde. Andererseits kann eine Überwachung 360 auf Öffnungsversuche erfolgen, die diese Massnahmen auslöst. Ein erkannter Öffnungsversuch kann ausserdem einen Alarm auslösen 370, wie schon weiter oben beschrieben. Insbesondere wenn erkannt wird 380, dass ein erfolgreicher Öffnungsversuch erfolgt ist, oder unmittelbar bevorsteht, können der Inhalt oder wesentliche Teile des Vermessungsgerätes auch zerstört bzw. unbrauchbar gemacht werden 390 - z. B. mechanisch, thermisch oder elektrisch. Alternativ kann beispielsweise mit einer auffälligen Farbe das Gerät als gestohlen gekennzeichnet werden. Auch kann ein von der Kommunikationseinheit Befehl an das Gerät übermittelt werden, in einen Diebstahl- oder Sperrmodus zu verfallen, in dem wesentliche Funktionen des Vermessungsgerätes ausser Betrieb sind. Um das Gerät wieder funktionsfähig zu machen, kann dann beispielsweise ein Entsperrcode nötig sein.

Es versteht sich, dass diese dargestellten Figuren nur mögliche Ausführungsbeispiele schematisch darstellen. Die verschiedenen Ansätze können im Rahmen der nachfolgenden Ansprüche miteinander sowie mit Verfahren und Geräten des Stands der Technik kombiniert werden.

## Patentansprüche

1. Tragbarer Schutzbehälter (10) zum Transport eines elektrischen, zur optischen Abstandsmessung und zur Erfassung von dreidimensionalen Koordinaten entfernter Objekte ausgestalteten Vermessungsgerätes (40), aufweisend
- eine äussere Hülle (11), die einen Innenraum (12) umschliesst, welcher zur Aufnahme des Vermessungsgerätes (40) ausgestaltet ist, wobei der Innenraum (12) mindestens eine Halterung aufweist, die speziell zur Aufnahme eines bestimmten Vermessungsgeräte-Typs mit bekannten Ausmassen ausgestaltet ist,
- einen Schliessmechanismus (13), der dazu ausgestaltet ist, ein Öffnen des Schutzbehälters (10) durch einen Benutzer zu ermöglichen,
- eine in den Schutzbehälter (10) integrierte Kommunikationseinheit (20), die dazu ausgestaltet ist, Daten mit dem Vermessungsgerät (40) auszutauschen, und
- eine Versorgungseinheit zur Stromversorgung der Kommunikationseinheit (20),
**dadurch gekennzeichnet, dass**
- die Versorgungseinheit Mittel für eine externe Stromversorgung aufweist und zur Stromversorgung des Vermessungsgerätes (40) im Innenraum (12) mittels eines Kabels, mittels elektrischer Kontakte oder mittels Induktion ausgestaltet ist, wobei durch die Versorgungseinheit eine Batterie des Vermessungsgeräts im Innenraum geladen werden kann,
- der Schutzbehälter (10) auf der äusseren Hülle (11) eine Mensch-Maschine-Schnittstelle mit einer als ein Touchscreen ausgestalteten Anzeigeeinheit aufweist, wobei die Anzeigeeinheit zum Anzeigen von Informationen über das im Innenraum (12) befindliche Vermessungsgerät (40) ausgestaltet ist, wobei die Informationen mindestens einen Ladezustand der Batterie des Vermessungsgerätes (40) umfassen, und
- die Kommunikationseinheit (20) dazu ausgestaltet ist,
- der Anzeigeeinheit die Informationen über das im Innenraum (12) befindliche Vermessungsgerät (40) bereitzustellen,
- über ein Funknetz einsatzbezogene und/oder einsatzortbezogene Daten abzurufen und an das Vermessungsgerät (40) weiterzuleiten, und
- von dem Vermessungsgerät (40) empfangene Daten über das Funknetz zu versenden, wobei die von dem Vermessungsgerät (40) empfangenen Daten durch das Vermessungsgerät (40) erfasste Entfernungen oder 3D-Koordinaten umfassen.

2. Schutzbehälter (10) nach Anspruch 1,
**dadurch gekennzeichnet, dass**
die Mittel für eine externe Stromversorgung einen Anschluss für ein Stromkabel, Induktionsspulen oder elektrische Kontakte aufweisen.

3. Schutzbehälter (10) nach Anspruch 1 oder Anspruch 2, **dadurch gekennzeichnet, dass**
die Versorgungseinheit zur Stromversorgung des Vermessungsgerätes (40) im Innenraum (12) mittels Induktion ausgestaltet ist.

4. Schutzbehälter (10) nach einem der vorangehenden Ansprüche,
**dadurch gekennzeichnet, dass**
das Vermessungsgerät (40) ein Laserscanner ist.

5. Schutzbehälter (10) nach Anspruch 1,
**dadurch gekennzeichnet, dass**
- der Innenraum mit einem Trägermaterial, insbesondere einem Schaumstoff oder einer mittels Blasformen hergestellter Kunststoffform, verfüllt ist, und
- die mindestens eine Halterung eine Aussparung (15-17) in dem Trägermaterial mit einer dem Vermessungsgerät (40) entsprechenden Form ist.

6. Schutzbehälter (10) nach einem der vorangehenden
Ansprüche,
**dadurch gekennzeichnet, dass**
die Kommunikationseinheit (20) dazu ausgestaltet ist, eine Verbindung mit mindestens einem Vermessungsgerät (40) aufzunehmen, welches sich nicht im Innenraum (12) des Schutzbehälters (10) befindet.

7. Schutzbehälter (10) nach einem der vorangehenden
Ansprüche,
**dadurch gekennzeichnet, dass**
die Kommunikationseinheit (20) dazu ausgestaltet ist, eine Verbindung mit dem Internet (30) herzustellen, und Daten über das Internet abzurufen und zu versenden.

8. Schutzbehälter (10) nach einem der vorangehenden Ansprüche,
**gekennzeichnet durch** Überprüfungsmittel zum Überprüfen eines Vorhandenseins eines Vermessungsgerätes (40) im Innenraum (12).

9. Schutzbehälter (10) nach Anspruch 8, **dadurch gekennzeichnet, dass** die Überprüfungsmittel zum Überprüfen einer Identität des Vermessungsgerätes (40) im Innenraum (12) ausgestaltet sind.

10. Schutzbehälter (10) nach Anspruch 8 oder Anspruch 9, **dadurch gekennzeichnet, dass**
die Überprüfungsmittel mindestens eine Kamera, einen Annäherungssensor, einen Barcodescanner oder ein RFID-Lesegerät aufweisen.

11. Schutzbehälter (10) nach einem der Ansprüche 8 bis 10, **dadurch gekennzeichnet, dass**
- die Überprüfungsmittel Mittel zum Generieren eines kabellosen Datennetzwerkes im Innenraum (12), insbesondere mittels Bluetooth oder mittels eines WLAN-Signals, aufweisen, und
- die Kommunikationseinheit (20) dazu ausgestaltet ist, über das kabellose Datennetzwerk Daten mit dem Vermessungsgerät (40) auszutauschen.

12. Schutzbehälter (10) nach einem der vorangehenden Ansprüche, **dadurch gekennzeichnet, dass** die Versorgungseinheit mindestens
- einen Akkumulator (21),
- einen Strom-Generator,
- eine Brennstoffzelle oder
- Solarzellen
aufweist.

13. Schutzbehälter (10) nach einem der vorangehenden
Ansprüche,
**gekennzeichnet durch**
einen Griff, der dazu ausgestaltet ist, ein Tragen des Schutzbehälters (10) durch einen Benutzer zu ermöglichen.

## Claims

1. Portable protective container (10) for transporting an electrical surveying device (40) designed for optical distance measurement and for detecting three-dimensional coordinates of distant objects, comprising
- an outer shell (11) enclosing an interior space (12) configured to accommodate the surveying device (40), wherein the interior space (12) comprises at least one holder specifically configured to accommodate a particular type of surveying instrument of known dimensions,
- a closing mechanism (13) configured to allow the protective container (10) to be opened by a user,
- a communication unit (20) integrated in the protective container (10) and designed to exchange data with the surveying device (40), and
- a power supply unit for supplying power to the communication unit (20),
**characterized in that**
- the power supply unit comprises means for an external power supply and is designed for supplying power to the surveying device (40) in the interior space (12) by means of a cable, by means of electrical contacts or by means of induction, wherein a battery of the surveying instrument in the interior space can be charged by the power supply unit,
- the protective container (10) comprises on the outer shell (11) a man-machine interface with a display unit designed as a touchscreen, wherein the display unit is designed to display information about the surveying device (40) located in the interior space (12), wherein the information comprises at least a charging state of the battery of the surveying device (40), and
- the communication unit (20) is designed for the purpose of
- providing the display unit with the information about the surveying device (40) located in the interior space (12),
- retrieving mission-related and/or mission-site-related data via a radio network and forwarding said data to the surveying device (40), and
- transmitting data received from the surveying device (40) over the radio network, wherein the data received from the surveying device (40) comprise distances or 3D coordinates detected by the surveying device (40).

2. Protective container (10) according to claim 1, **characterized in that** the means for an external power supply comprise a connection for a power cable, induction coils or electrical contacts.

3. Protective container (10) according to claim 1 or claim 2, **characterized in that** the power supply unit is designed to supply power to the surveying device (40) in the interior space (12) by means of induction.

4. Protective container (10) according to one of the preceding claims, **characterized in that** the surveying device (40) is a laser scanner.

5. Protective container (10) according to claim 1, **characterized in that**
- the interior space is lined with a carrier material, in particular a foam material or a plastic mold produced by means of blow molding, and
- the at least one holder is a recess (15-17) in the carrier material having a shape corresponding to the surveying device (40).

6. Protective container (10) according to one of the preceding claims, **characterized in that** the communication unit (20) is designed to establish a connection with at least one surveying device (40) which is not located in the interior space (12) of the protective container (10).

7. Protective container (10) according to one of the preceding claims, **characterized in that** the communication unit (20) is designed to produce a connection with the internet (30) and to retrieve and send data via the internet.

8. Protective container (10) according to one of the preceding claims, **characterized by** verification means for verifying a presence of a surveying device (40) in the interior space (12).

9. Protective container (10) according to claim 8, **characterized in that** the verification means are designed for verifying an identity of the surveying device (40) in the interior space (12).

10. Protective container (10) according to claim 8 or claim 9, **characterized in that** the verification means comprise at least a camera, a proximity sensor, a barcode scanner or an RFID reader.

11. Protective container (10) according to one of claims 8 to 10, **characterized in that**
- the verification means comprise means for generating a wireless data network in the interior space (12), in particular by means of Bluetooth or by means of a Wi-Fi signal, and
- the communication unit (20) is designed to exchange data with the surveying device (40) via the wireless data network.

12. Protective container (10) according to one of the preceding claims, **characterized in that** the supply unit comprises at least
- an accumulator (21),
- a current generator,
- a fuel cell or
- solar cells.

13. Protective container (10) according to one of the preceding claims, **characterized by** a handle which is designed to enable the protective container (10) to be carried by a user.

## Revendications

1. Récipient de sécurité portable (10) pour le transport d'un appareil d'arpentage électrique (40), configuré pour la mesure de la distance optique et pour la saisie de coordonnées tridimensionnelles d'objets éloignés, comportant
- une enveloppe extérieure (11) dotée d'une coque interne entourant un espace intérieur (12), laquelle est configurée pour loger l'appareil d'arpentage (40), dans lequel l'espace intérieur (12) comporte au moins un maintien, lequel est configuré spécialement pour le logement d'un type déterminé d'appareil d'arpentage de dimensions connues,
- un mécanisme de fermeture (13), lequel est configuré pour permettre à un utilisateur d'ouvrir le récipient de sécurité (10),
- une unité de communication (20) intégrée dans le récipient de sécurité (10), laquelle est configurée pour échanger des données avec l'appareil d'arpentage (40),
- une unité d'alimentation pour l'alimentation électrique de l'unité de communication (20),
**caractérisé en ce que**
- l'unité d'alimentation comporte des moyens pour une alimentation externe en courant et est configurée pour l'alimentation en courant de l'appareil d'arpentage (40) dans l'espace intérieur (12) au moyen d'un câble, au moyen de contacts électriques ou par induction, dans lequel une batterie de l'appareil d'arpentage peut être chargée dans l'espace intérieur par l'unité d'alimentation,
- le récipient de sécurité (10) comporte sur l'enveloppe extérieure (11) une interface homme-machine dotée d'une unité d'affichage configurée comme écran tactile, dans lequel l'unité d'affichage est configurée pour afficher des informations sur l'appareil d'arpentage (40) se trouvant dans l'espace intérieur (12), dans lequel les informations comprennent au moins un état de charge de la batterie de l'appareil d'arpentage (40), et
- l'unité de communication (20) est configurée pour
- fournir à l'unité d'affichage les informations sur l'appareil d'arpentage (40) se trouvant dans l'espace intérieur (12),
- rappeler par le biais d'un réseau radio des données en rapport avec le travail et/ou le site de travail et les transmettre à l'appareil d'arpentage (40), et
- émettre par le biais du réseau radio des données reçues par l'appareil d'arpentage (40), dans lequel les données reçues par l'appareil d'arpentage (40) comprennent des distances ou des coordonnées 3D saisies par l'appareil d'arpentage (40).

2. Récipient de sécurité (10) selon la revendication 1, **caractérisé en ce que**
les moyens d'alimentation externe en courant comportent un raccordement pour un câble électrique, des bobines d'induction ou des contacts électriques.

3. Récipient de sécurité (10) selon la revendication 1 ou la revendication 2,
**caractérisé en ce que**
l'unité d'alimentation est en outre configurée pour alimenter en courant l'appareil d'arpentage (40) dans l'espace intérieur (12) par induction.

4. Récipient de sécurité (10) selon l'une des revendications précédentes,
**caractérisé en ce que**
l'appareil d'arpentage (40) est un scanner laser.

5. Récipient de sécurité (10) selon la revendication 1, **caractérisé en ce que**
- l'espace intérieur est rempli d'un matériau porteur, en particulier une mousse ou une forme en plastique fabriquée par soufflage, et
- l'au moins un maintien est un évidement (15-17) dans le matériau porteur doté d'une forme correspondant à l'appareil d'arpentage (40).

6. Récipient de sécurité (10) selon l'une des revendications précédentes,
**caractérisé en ce que**
l'unité de communication (20) est configurée pour entrer en contact avec au moins un appareil d'arpentage (40) ne se trouvant pas dans l'espace intérieur (12) du récipient de sécurité (10).

7. Récipient de sécurité (10) selon l'une des revendications précédentes,
**caractérisé en ce que**
l'unité de communication (20) est configurée pour établir une connexion à Internet (30), et rappeler et envoyer des données par le biais d'Internet.

8. Récipient de sécurité (10) selon l'une des revendications précédentes,
**caractérisé par**
des moyens de contrôle pour contrôler une présence d'un appareil d'arpentage (40) dans l'espace intérieur (12) .

9. Récipient de sécurité (10) selon la revendication 8, **caractérisé en ce que**
les moyens de contrôle sont configurés pour contrôler une identité (40) de l'appareil d'arpentage dans l'espace intérieur (12).

10. Récipient de sécurité (10) selon la revendication 8 ou la revendication 9,
**caractérisé en ce que**
les moyens de contrôle comportent au moins une caméra, un détecteur de proximité, un lecteur de code-barres ou un lecteur RFID.

11. Récipient de sécurité (10) selon l'une des revendications 8 à 10,
**caractérisé en ce que**
- les moyens de contrôle comportent des moyens de générer un réseau de données sans fil dans l'espace intérieur (12), en particulier par Bluetooth ou au moyen d'un signal WLAN, et
- l'unité de communication (20) est configurée pour échanger des données avec l'appareil d'arpentage (40) par le biais du réseau de données sans fil.

12. Récipient de sécurité (10) selon l'une des revendications précédentes,
**caractérisé en ce que**
l'unité d'alimentation comporte au moins
- un accumulateur (21),
- un générateur de courant,
- une pile à combustible ou
- des cellules solaires.

13. Récipient de sécurité (10) selon l'une des revendications précédentes,
**caractérisé par**
une poignée, laquelle est configurée pour permettre à un utilisateur de porter le récipient de sécurité (10) .
